# EUROPÄISCHE PATENTANMELDUNG

(11) **EP 2 187 071 A2**
(43) Veröffentlichungstag der Anmeldung: **19.05.2010**
(21) Anmeldenummer: 09175809.4
(22) Anmeldetag: 12.11.2009
(51) Int. Cl.: F16B 37/06

(54) **Nietteil mit geschlitztem Schaft**

(30) Priorität: 18.11.2008 DE 102008057903
(71) Anmelder: Kerb-Konus-Vertriebs-GmbH, 92224 Amberg (DE)
(72) Erfinder: Hausmann, Johann, 92253 Schnaittenbach (DE)
(74) Vertreter: Zech, Stefan Markus

(57) **Zusammenfassung**

Nietteil (1), insbesondere Nietmutter (1), mit einem Nietkopf (10), der als kopfartige Erweiterung eines an den Nietkopf (10) anschließenden Schaftes (11) ausgebildet ist, wobei der Schaft (11) an seinem dem Nietkopf (10) abgewandten Ende einen, insbesondere kreisförmig umlaufenden Schlitz (21) aufweist, und so einen geschlitzten Schaftabschnitt (12) definiert, wobei der geschlitzte Schaftabschnitt (12) einen äußeren Schaftabschnitt (13) und einen inneren Schaftabschnitt (14) aufweist, und der äußere Schaftabschnitt (13) eine Außenwand (15) und eine Innenwand (16) umfasst und an seinem dem Nietkopf (10) abgewandten Ende von einem Abschlussrand (17) begrenzt wird, und der innere Schaftabschnitt (14) eine Außenwand (18) und eine Innenwand (19) umfasst und an seinem dem Nietkopf (10) abgewandten Ende von einem zweiten Abschlussrand (20) begrenzt wird, und wobei der äußere Schaftabschnitt (13) wenigstens teilweise zum materialumformenden Verpressen vorgesehen ist, um das Nietteil (1) in einer Bauteilausnehmung (3) eines Bauteils (3) zu befestigen.

## Beschreibung

Die Erfindung betrifft ein Nietteil, insbesondere eine Nietmutter, mit einem Nietkopf, der als kopfartige Erweiterung eines an dem Nietkopf anschließenden Schaftes ausgebildet ist. Weiterhin betrifft die Erfindung ein Nietwerkzeug zum Verpressen eines solchen Nietteils sowie ein Verfahren zum Verpressen eines solchen Nietteils.

Nietteile im Folgenden betreffen Verbindungselemente, welche zum Verpressen (Vernieten) mit einem Bauteil vorgesehen sind und infolge des Verpressens mit dem Bauteil mechanisch verbunden werden. Die Nietteile können bevorzugt so ausgeformt sein, dass sie Verbindungsabschnitte aufweisen, welche eine Verbindung des verpressten Nietteils mit einem weiteren Gegenstand über insbesondere einen mechanischen Verbindungsabschnitt erlauben. Typische solche Verbindungsabschnitte können Aufnahmen oder Aussparungen sein, welche zur Verbindung mit Gegenständen mit geeignetem Gegenverbindungsabschnitt zur Einführung in die Aufnahme oder Aussparung vorgesehen sind. Die einfachste derartige Form einer Aufnahme oder einer Aussparung ist eine zylindrische Bohrung mit Innengewinde, in welche eine Schraube mit entsprechend ausgeformtem Außengewinde eingedreht werden kann. Weiterhin können die Nietteile auch so ausgeformt sein, dass die Verbindungsabschnitte als stiftartige oder geeignet geformte Befestigungsvorrichtungen bzw. als Fortsätze ausgebildet sind, welche ihrerseits in Aufnahmen oder Aussparungen von zur Verbindung mit dem Nietteil vorgesehener Gegenstände eingefügt werden können. Die einfachste derartige Ausführungsform ist ein Nietteil mit einem stiftartigen Fortsatz, welcher ein Schraubenaußengewinde aufweist, also ein Schraubenfortsatz, und in ein entsprechend passendes Innengewinde eines Gegenstandes eingeschraubt werden kann. Neben Schraubenverbindungen sind jedoch vorliegend auch noch Bajonettverbindungen, Clipverbindungen, Magnetverbindungen, Spreizverbindungen, Steckverbindungen, Hakenverbindungen, Klemmverbindungen sowie alle anderen Verbindungsformen, welche zur mechanischen Verbindung zweier Elemente geeignet sind, denkbar.

Insbesondere umfassen Nietteile im folgenden Gewindeeinsätze, Einnietmuttern, Einpressmuttern, Einpressgewindestifte, Clifa^{®}-Verbindungselemente, Anchor^{®}-Verbindungselemente, Einpress-Abstandsbuchsen, Einpress-Gewindebuchsen, Einpress-Abstandshalter sowie Stanznieten.

Nietteile werden im Zusammenhang mit den unterschiedlichsten festen Gegenständen bevorzugt zur mechanischen Befestigung weiterer Elemente oder Gegenstände eingesetzt. Hierbei sind Nietteile etwa dafür vorgesehen, eine Anzahl an Bauteilelementen miteinander fest zu verbinden bzw. aneinander zu befestigen oder ermöglichen die Verbindung eines Bauteils mit anderen, zur Befestigung vorgesehenen Elementen und Gegenständen. Hierbei wird zur Befestigung des Nietteils an einem vorbestimmten Bauteil das Nietteil typischerweise in eine Bauteilausnehmung des Bauteils eingefügt und anschließend durch umformendes Verpressen des Nietteils eine mechanisch belastbare Verbindung zwischen Nietteil und Bauteil erzeugt.

Insbesondere dann, wenn das Nietteil selbst als Verbindungs- bzw. Befestigungselement zwischen dem Bauteil und weiteren zur Befestigung vorgesehenen Gegenstände verwendet wird, kann es durch das Verpressen des Nietteils zur Ausbildung eines nicht weiter für eine Verbindungsherstellung nutzbaren Raumbereich nahe den verpressten Abschnitten des Nietteils kommen. Ein solcher Raumbereich bildet sich insbesondere in dem Aufweitungsbereich des Nietteils, etwa in einem aufgeweiteten Schaftbereich des Nietteils aus. Eine sinnvolle Nutzung des an den Aufweitungsbereich angrenzenden Raumbereich ist folglich in den meisten Fällen nicht möglich.

Ein solcher nicht nutzbarer Raumbereich entsteht beispielsweise dann, wenn ein ein Schraubeninnengewinde aufweisendes Nietteil mit Schaftabschnitt über ein Aufweiten des Schaftabschnittes in einem Bauteil verpresst wird, da der Aufweitungsprozess im Regelfall das ebenso in dem aufgeweiteten Schaftabschnitt vorgesehene Schraubeninnengewinde beschädigt oder sogar zerstört. Aus diesen Gründen ist typischerweise in diesen zur Verpressung vorgesehenen Schaftabschnitten kein Schraubeninnengewinde vorgesehen. Sollte nun eine Schraube von dem der Aufweitung zugewandten Ende des Nietteils in das Nietteil eingedreht werden, kann ein mechanisches Eingreifen des Außengewindes der Schraube in das Innengewinde des Nietteils nicht bereits auf dem Niveau eines Abschlussrandes des Schaftabschnittes gewährleistet werden.

Bei zahlreichen technischen Anwendungen ist die Ausbildung eines solchen für die Verbindung mit einem weiteren Gegenstand nicht nutzbaren Raumbereichs nicht erwünscht. Einerseits erlaubt der nicht nutzbare Raumbereich keine effiziente Nutzung des zur Verfügung stehenden Platzes und andererseits mindert der durch die Aufweitung bzw. Materialumformung des Nietteils entstehende Raumbereich die Verbindungssicherheit, die Verbindungsfestigkeit bzw. die Präzision mit welcher weitere Gegenstände an dem Nietteil befestigt werden können. Vor allem ist es in zahlreichen technischen Anwendungen wünschenswert, ein Nietteil in einem plattenförmigen Bauteil zu verpressen, so dass die Verbindbarkeit des Nietteiles mit anderen Gegenständen auf der der beim Verpressen entstehenden Materialumformung des Nietteils zugewandten Seite des Bauteils nicht vermindert ist.

Hier und im Folgenden bezieht sich die Verbindbarkeit des Nietteils nicht auf die Verbindung des Nietteils mit einem Bauteil, sondern auf eine mögliche Verbindung zur Befestigung eines weiteren Gegenstandes an dem Nietteil.

Folglich stellt sich die Aufgabe, ein Nietteil vorzuschlagen, welches eine bessere Raumnutzung insbesondere innerhalb der Bauteilausnehmung gestattet. Weiterhin ist es Aufgabe der vorliegenden Erfindung, ein Nietwerkzeug zum Verpressen eines solchen Nietteils bzw. ein Verfahren zum Verpressen eines solchen Nietteils anzugeben.

Diese Aufgabe wird durch ein Nietteil gemäß Patentanspruch 1, 2 sowie durch ein Nietwerkzeug zum Verpressen eines Nietteils gemäß Patentanspruch 14 und ein Verfahren zum Verpressen eines Nietteils gemäß Patentanspruch 15 gelöst.

Insbesondere wird die Aufgabe durch ein Nietteil mit einem Nietkopf gelöst, welcher Nietkopf als kopfartige Erweiterung eines an den Nietkopf anschließenden Schaftes ausgebildet ist, wobei der Schaft an seinem dem Nietkopf abgewandten Ende einen, insbesondere kreisförmig umlaufenden Schlitz aufweist, und so einen geschlitzten Schaftabschnitt definiert, wobei der geschlitzte Schaftabschnitt einen äußeren Schaftabschnitt und einen inneren Schaftabschnitt aufweist, und der äußere Schaftabschnitt eine Außenwand und eine Innenwand umfasst und an seinem dem Nietkopf abgewandten Ende von einem Abschlussrand begrenzt wird, und der innere Schaftabschnitt wenigstens eine Außenwand umfasst, wobei der äußere Schaftabschnitt wenigstens teilweise zum materialumformenden Verpressen vorgesehen ist, um das Nietteil in einer Bauteilausnehmung eines Bauteils zu befestigen.

Insbesondere wird die Aufgabe weiterhin durch ein Nietteil gelöst, insbesondere durch eine Nietmutter, mit einem Nietkopf, der als kopfartige Erweiterung eines an den Nietkopf anschließenden Schaftes ausgebildet ist, wobei der Schaft an seinem dem Nietkopf abgewandten Ende einen, insbesondere kreisförmig umlaufenden Schlitz aufweist, und so einen geschlitzten Schaftabschnitt definiert, wobei der geschlitzte Schaftabschnitt einen äußeren Schaftabschnitt und einen inneren Schaftabschnitt aufweist, und der äußere Schaftabschnitt eine Außenwand und eine Innenwand umfasst und an seinem dem Nietkopf abgewandten Ende von einem ersten Abschlussrand begrenzt wird und der innere Schaftabschnitt eine Außenwand und eine Innenwand umfasst und an seinem dem Nietkopf abgewandten Ende von einem zweiten Abschlussrand begrenzt wird, und wobei der äußere Schaftabschnitt wenigstens teilweise zum materialumformenden Verpressen vorgesehen ist, um das Nietteil in einer Bauteilausnehmung eines Bauteils zu befestigen.

Weiterhin wird die Aufgabe durch ein Nietwerkzeug gelöst, welches zum Verpressen eines Nietteils mit einem Nietkopf vorgesehen ist, der als kopfartige Erweiterung eines an den Nietkopf anschließenden Schaftes ausgebildet ist, wobei der Schaft an seinem dem Nietkopf abgewandten Ende einen, insbesondere kreisförmig umlaufenden Schlitz aufweist, und so einen geschlitzten Schaftabschnitt definiert, wobei der geschlitzte Schaftabschnitt einen äußeren Schaftabschnitt und einen inneren Schaftabschnitt aufweist, und der äußere Schaftabschnitt eine Außenwand und eine Innenwand umfasst und an seinem dem Nietkopf abgewandten Ende von einem ersten Abschlussrand begrenzt wird, wobei das Nietwerkzeug zum Verpressen des Nietteils ein dem Schaft zugeordnetes Werkzeugteil aufweist, wobei das Werkzeugteil ein dem äußeren Schaftabschnitt mit Kraft beaufschlagendes Formteil aufweist, welches einen zu seinem Ende hin zulaufenden Verjüngungsabschnitt aufweist, der zum Aufweiten des äußeren Schaftabschnittes des Nietteils in den Schlitz eingreift und zunehmend in Richtung des Nietkopfes des Nietteils unter Kraftbeaufschlagung und Materialumformung des äußeren Schaftabschnittes verschoben wird, um das Nietteil in einer Bauteilausnehmung eines Bauteils zu befestigen.

Überdies wird die Aufgabe durch ein Verfahren gelöst zum Verpressen eines Nietteils mit einem Nietkopf, der als kopfartige Erweiterung eines an den Nietkopf anschließenden Schaftes ausgebildet ist, wobei der Schaft an seinem dem Nietkopf abgewandten Ende einen, insbesondere kreisförmig umlaufenden Schlitz aufweist, und so einen geschlitzten Schaftabschnitt definiert, wobei der geschlitzte Schaftabschnitt einen äußeren Schaftabschnitt und einen inneren Schaftabschnitt aufweist, und der äußere Schaftabschnitt eine Außenwand und eine Innenwand umfasst und an seinem dem Nietkopf abgewandten Ende von einem ersten Abschlussrand begrenzt wird, unter Verwendung eines Nietwerkzeuges, welches zum Verpressen des Nietteils ein dem Schaft zugeordnetes Werkzeugteil aufweist, wobei das Werkzeugteil ein den äußeren Schaftabschnitt mit Kraft beaufschlagendes Formteil aufweist, welches einen zu seinem Ende hin zulaufenden Verjüngungsabschnitt aufweist, wobei der Verjüngungsabschnitt des Werkzeugteils zum Aufweiten des äußeren Schaftabschnittes des Nietteils in den Schlitz eingeführt wird und zunehmend in Richtung des Nietkopfes des Nietteils unter Kraftbeaufschlagung und Materialumformung des äußeren Schaftabschnittes verschoben wird, um das Nietteil in einer Bauteilausnehmung eines Bauteils zu befestigen.

Ein Kerngedanke der Erfindung liegt darin, einen geschlitzten Schaftabschnitt eines Nietteils vorzusehen, welcher einen äußeren Schaftabschnitt, der zum Verpressen vorgesehen ist, umfasst, sowie einen inneren Schaftabschnitt, der während des Verpressens unverändert bleibt. Demgemäß steht der innere Schaftabschnitt weiterhin auch nach dem Verpressen des Nietteils in einem Bauteil - wenigstens zunächst - unverformt und unverändert eigenständigen Umbildungen und/oder zur Befestigung mit weiteren Gegenständen zur Verfügung, wodurch die Verbindbarkeit des Nietteils insgesamt deutlich verbessert wird. Insbesondere bewirkt das Verpressen des äußeren Schaftabschnittes mit Sicht auf den inneren Schaftabschnitt nicht die Ausbildung eines Raumbereiches, welcher ähnlich einem Totvolumen, für weitere Befestigungs- bzw. Verbindungszwecke nicht genutzt werden kann.

Gerade in einer Ausführungsform des Nietteils, welche etwa auf der Innenwand des inneren Schaftabschnittes des Nietteils ein Schraubeninnengewinde aufweist, wird die verbesserte Verbindbarkeit des erfindungsgemäßen Nietteils deutlich, wenn das Schraubeninnengewinde sich etwa bis zum Abschlussrand des inneren Schaftabschnittes erstreckt und für die Verbindung mit einem stiftartigen Schraubenteil zur Verfügung steht. Wird nämlich das Nietteil so verpresst, dass der zweite Abschlussrand des inneren Schaftabschnittes bündig mit einer Fläche des Bauteils abschließt, kann ein ein Außengewinde aufweisendes, stiftartiges Schraubenteil, welches zur Verbindung mit dem Innengewinde des Nietteils vorgesehen ist, bereits auf der Höhe des zweiten Abschlussrandes und damit auf der Höhe der Fläche des Bauteils in das Nietteil eingeschraubt werden. Hierbei erfolgt bereits auf Höhe des zweiten Abschlussrandes ein Eingriff des Außengewindes des stiftartigen Schraubenteils in das Innengewinde des Nietteils.

Ein weiterer Aspekt der vorliegenden Erfindung liegt ferner darin, dass durch die Vermeidung eines nach dem Verpressen des Nietteiles unnutzbaren Raumbereiches auch der Nietkopf im Vergleich zu Nietteilen, welche aus dem Stande der Technik bekannt sind, flacher ausgeführt werden kann, ohne dass jedoch die Verbindungsfestigkeit, welche aus der gesamten Länge des Verbindungsbereiches, insbesondere aus der Länge des Schraubeninnengewindes resultiert, vermindert würde. Hier und im Folgenden wird unter der Länge des Nietteils bzw. seiner Abschnitte die Ausdehnungsrichtung bezeichnet, welche mit der Richtung des Einführens des Nietteils in eine Bauteilausnehmung eines Bauteils überstimmt.

In einer bevorzugten Ausführungsform des erfindungsgemäßen Nietteils ist der Schlitz derart ausgeführt, dass er sich zum Nietkopf hin verjüngt. Ein sich derartig verjüngender Schlitz ist herstellungstechnisch besonders einfach in den Schaft des Nietteils einzuarbeiten. Weiterhin ermöglicht ein zum Nietkopf sich hin verjüngend zulaufender Schlitz beim Verpressen eine günstige Verteilung der zum Verpressen des Nietteils notwendigen Kräfte, insbesondere ermöglicht die ausführungsgemäße Schlitzform bei Verwendung eines geeignet geformten Nietwerkzeuges eine relativ gleichmäßige Verpressung des Nietteils, ohne dass Bruchstellen im Bereich des Schaftes, insbesondere im Bereich des äußeren Schaftabschnittes zu befürchten sind.

In einer weiterführenden Ausführungsform des erfindungsgemäßen Nietteils kann sich der zum Nietkopf hin verjüngende Schlitz auch bis in den Nietkopf hinein erstrecken. Ebenfalls denkbar ist jedoch auch die Ausbildung eines Schlitzes, welcher sich lediglich über Teilbereiche des Schaftes, insbesondere nicht bis zum Nietkopf hin erstreckt.

In einer ebenfalls bevorzugten Ausführungsform des erfindungsgemäßen Nietteils ist vorgesehen, dass der äußere Schaftabschnitt sich zum Nietkopf hin verbreiternd ausgeführt ist. Dadurch wird einerseits sichergestellt, dass auch nach dem Verpressen des Nietteils in einem Bauteil nur eine relativ geringe Gefahr im Hinblick auf Materialbruch bzw. Materialermüdung im Schaftbereich nahe des Nietkopfes zu befürchten ist. Der sich zum Nietkopf hin verbreiternd ausgeführte äußere Schaftabschnitt trägt folglich zu einer großen Robustheit und Festigkeit des Nietteils im verpressten Zustand bei.

In einer anderen Ausführungsform des erfindungsgemäßen Nietteils ist vorgesehen, dass die Außenwand des Schaftes, insbesondere des äußeren Schaftabschnittes eine Verdrehsicherung, insbesondere eine Rändel aufweist. Hierdurch wird gewährleistet, dass das Nietteil im verpressten Zustand sich auch bei Kraftbeaufschlagung bzw. Drehmomentbeaufschlagung, insbesondere bei Kraftbeaufschlagung bzw. Drehmomentbeaufschlagung des inneren Schaftabschnittes sich in dem Bauteil nicht verdrehen kann. Gerade dann, wenn etwa der innere Schaftabschnitt ein Schraubeninnengewinde aufweist, welches zum Einsetzen und Verschrauben mit einem stiftartigen, ein passendes Schraubenaußengewinde aufweisenden Gegenstand vorgesehen ist, kann es beim Einschrauben dieses Gegenstandes in das Schraubeninnengewinde leicht zur ungewollten Verdrehung des Nietteils kommen. Ausführungsgemäß wird diesem Verdrehen durch eine Verdrehsicherung entgegengewirkt, welche typischerweise als Materialvorsprünge bzw. Materialprofilierung ausgeführt ist, und nach dem Verpressen des Nietteils in einem Bauteil einen verbesserten Halt des Nietteils in dem Bauteil gewährleisten. Bei Vorsehen einer Rändel, welche als regelmäßige Abfolge von Materialerhöhungen und Materialerniedrigungen auf der Außenwand des Schaftes ausgebildet ist, schneiden sich die Materialerhöhungen beim Verpressen des Nietteils in den Randbereich einer Bauteilausnehmung ein, und erzeugen folglich eine mechanische Sicherung des Nietteils gegen Drehkräfte.

In einer weiteren bevorzugten Ausführungsform des erfindungsgemäßen Nietteils weist das Nietteil ein Schraubeninnengewinde auf, welches sich über Bereiche einer runden Ausnehmung, insbesondere einer Bohrung, des Nietkopfes und/oder über Bereiche der Innenwand des inneren Schaftabschnittes erstreckt. Ein solches Schraubeninnengewinde erlaubt, das Nietteil mit einem Gegenstand zu verbinden, welcher ein geeignetes Außengewinde als Gegengewinde aufweist und in das Schraubeninnengewinde eingeschraubt werden kann. Hierbei kann das Schraubeninnengewinde in der runden Ausnehmung so angeordnet sein, dass beim Einschrauben des stiftartigen Gegenstandes mit Außengewinde in das Schraubeninnengewinde ein mechanisches Eingreifen beider Gewinde auf im Wesentlichen jedem Niveau der runden Ausnehmung erfolgen kann. Vorzugsweise erstreckt sich das Schraubeninnengewinde vor allem bis zum zweiten Abschlussrand des inneren Schaftabschnittes.

Ausführungsgemäß kann vorgesehen sein, dass der äußere Schaftabschnitt und der innere Schaftabschnitt auf der dem Nietkopf abgewandten Seite des Nietteils sich über eine im Wesentlichen gleiche Längenausdehnung erstrecken. Eine derartige Ausführungsform des Nietteils ist vor allem zum bündigen Verpressen auf der dem Nietkopf abgewandten Seite des Nietteils geeignet, wobei der zweite Abschlussrand des inneren Schaftabschnittes und eine Fläche des Bauteils bündig abschließend ausgerichtet sind.

In einer alternativen Ausführungsform kann vorgesehen sein, dass der äußere Schaftabschnitt über den inneren Schaftabschnitt auf der dem Nietkopf abgewandten Seite des Nietteils übersteht. Eine derartige Ausführungsform des Nietteils eignet sich vor allem dann, falls das Nietteil zur Befestigung von Gegenständen vorgesehen ist, deren Ausdehnung aus konstruktionstechnischen Gründen nicht vermindert werden kann, ohne größere Einbußen in Kauf nehmen zu müssen.

In einer weiteren alternativen Ausführungsform des erfindungsgemäßen Nietteils steht der innere Schaftabschnitt über den äußeren Schaftabschnitt auf der dem Nietkopf abgewandten Seite des Nietteils über. Eine derartige Ausführungsform des Nietteils ist insbesondere dann von Vorteil, wenn der innere Schaftabschnitt gleichermaßen als Verlängerung bzw. Materialbrücke verwendet werden kann, und die Befestigung eines weiteren Gegenstandes an dem Bauteil auch dann gewährleistet wird, wenn dieser sich nicht bis zum Bauteil hin erstrecken kann bzw. an dieses herangeführt werden kann.

In einer weiter bevorzugten Ausführungsform erstreckt sich der geschlitzte Schaftabschnitt höchstens über die Dicke des Bauteils von dem dem Nietkopf abgewandten Ende des Schaftes zum Nietkopf hin, insbesondere erstreckt er sich nicht bis zum Nietkopf hinein. Dementsprechend kann über die Ausformung des den geschlitzten Schaftabschnitt definierenden Schlitzes Einfluss auf die Verpresseigenschaften des Nietteils genommen werden. Erstreckt sich der Schlitz etwa lediglich über Teilbereiche des Schaftes, das heißt ist der geschlitzte Schaftabschnitt im Vergleich zum Schaft selbst kürzer ausgeführt, kann je nach Anwendungsfall eine verbesserte Verpressung des Nietteils in dem Bauteil erfolgen. Weiterhin vorteilhaft ist ausführungsgemäß eine Zeitersparnis beim Ausformen des Schlitzes in dem Schaft zur Ausbildung des geschlitzten Schaftabschnittes, wodurch auch geringere Herstellungskosten resultieren.

In einer weiteren Ausführungsform weist der innere Schaftabschnitt auf seiner Außenwand einen Gewindeabschnitt auf. Demzufolge ist das ausführungsgemäße Nietteil auch zur Verbindung mit Gegenständen geeignet, welche ein geeignet geformtes und passendes Innengewinde als Gegengewinde aufweisen. Ausführungsgemäß wird die Verbindbarkeit des Nietteils dadurch erhöht.

In einer anderen Ausführungsform des erfindungsgemäßen Nietteils weist der endständige Abschlussrand des äußeren Schaftabschnittes eine Abschrägung oder Abrundung auf, welche das Einfügen des Nietteils in die Bauteilausnehmung des Bauteils erleichtert. Solche Abschrägungen oder Abrundungen erweisen sich insbesondere bei Nietteilen von Vorteil, welche mit Hilfe von industriellen Nietverfahren in großen Stückzahlen in aufeinander folgender Weise eingesetzt und verpresst werden.

In einer anderen Ausführungsform des erfindungsgemäßen Nietteils sind der äußere Schaftabschnitt und/oder der innere Schaftabschnitt wenigstens teilweise oberflächenbehandelt. Eine derartige Oberflächenbehandlung kann beispielsweise die elektrische Leitfähigkeit bzw. die Korrosionsbeständigkeit des Nietteils betreffen, kann jedoch aber auch eine Verbesserung der Oberflächeneigenschaften des Schaftes betreffen, welche eine verbesserte Verpressung des Nietteils ermöglichen. Weiterhin kann die Oberflächenbehandlung eine Härtung des Nietteils betreffen, die einen verbesserten Materialfluss des Randmaterials des Schaftes bzw. der Bauteilausnehmung erzeugt, oder aber auch eine Oberflächenbeschichtung mit Substanzen vorsehen, die bei den hohen auftretenden Nietdrücken während des Nietprozesses den Materialfluss bzw. die Materialumformung des Nietteils zusätzlich fördern. Die Oberflächenbehandlung kann selektiv vorgenommen sein, oder aber auch das gesamte Nietteil betreffen. Insbesondere kann das Nietteil wenigstens teilweise oberflächenbehandelt sein. In einer alternativen Abwandlung kann die Oberflächenbehandlung auch Randbereich der Bauteilausnehmungen des Bauteils betreffen.

Fernerhin kann die Oberflächenbehandlung eine Verbesserung oder Unterdrückung der thermischen und elektrischen Leitfähigkeit des Schaftes des Nietteils oder anderer Bereiche des Nietteils betreffen. Insbesondere ist eine Oberflächenbehandlung in Form einer Schmierung und/oder eines Korrosionsschutzes auch unter Einfluss hoher Temperaturen umfasst, wobei Temperaturen bis zu 200 °C berücksichtigt sein können. Eine solche Oberflächenbehandlung erweist sich vor allem auch dann als geeignet, wenn das Nietteil einen Gewindeabschnitt, insbesondere einen Innengewindeabschnitt, aufweist. In anderen bevorzugten Ausführungsformen kann die Oberflächenbehandlung alle Arten von Gewindesicherungen und Gewindedichtungen betreffen, und insbesondere unter Verwendung von Tuflok^{®}, Nvtemp^{®}, Nvseal^{®}, Nvstav^{®}, Nvplast^{®}, Nvtorq^{®}, Nvcote^{®} und Precote^{®} 3M^{®} erfolgen.

In einer weiteren Ausführungsform des erfindungsgemäßen Nietteils ist der Nietkopf des Nietteils an dem Übergangsbereich zwischen dem Nietkopf und dem äußeren Schaftabschnitt einen nach dem Verpressen des Nietteils in der Bauteilausnehmung des Bauteils einen auf dem Bauteil bündig abschließend anliegenden Begrenzungsabschnitt auf, welcher eine Verdrehsicherung, insbesondere eine Rändel aufweist. Eine derartig angeordnete Verdrehsicherung kann wie im Falle der Anordnung an der Außenwand des äußeren Schaftabschnittes gewährleisten, dass nach dem Verpressen des Nietteils in dem Bauteil ein Verdrehen des Nietteils unterbleibt. Insbesondere wenn das Nietteil zur weiteren Verbindung bzw. Befestigung mit anderen Gegenständen unter Kraft- bzw. Drehmomentbeaufschlagung vorgesehen ist, erweist sich eine solche Verdrehsicherung als besonders vorteilhaft.

In einer weiteren Ausführungsform des erfindungsgemäßen Nietteils ist die effektive Wanddicke des äußeren Schaftabschnittes weniger als 1 mm, insbesondere zwischen 0,2 mm und 0,8 mm und/oder die effektive Wanddicke des inneren Schaftabschnittes weniger als 2 mm, insbesondere zwischen 0,5 mm und 1,5 mm. Eine derartige effektive Wanddicke des äußeren Schaftabschnittes ist, wie entsprechende Versuche belegt haben, geeignet, auch nach Verpressen des äußeren Schaftabschnittes in einem Bauteil einen ausreichenden Halt bzw. eine ausreichende Festigkeit des Nietteils in dem Bauteil zu gewährleisten, während gleichzeitig die Materialumformung beim Verpressen des Nietteiles bei einer typischerweise mit gewöhnlichen Nietwerkzeugen erreichbare Kraftbeaufschlagung erfolgen kann. Die effektive Wanddicke des inneren Schaftabschnittes ist ausreichend, um eine günstige mechanische Festigkeit gewährleisten zu können, falls der innere Schaftabschnitt zur weiteren Verbindung bzw. Befestigung mit anderen Gegenständen vorgesehen ist.

In einer weiterhin bevorzugten Ausführungsform des erfindungsgemäßen Nietteils weist der Nietkopf eine stiftförmige Befestigungsvorrichtung, insbesondere einen Schraubenfortsatz auf, welcher fest mit dem Nietkopf verbunden ist. Dementsprechend kann das ausführungsgemäße Nietteil auch mit Gegenständen verbunden werden, welche einen geeigneten vertieften Gegenbefestigungsbereich aufweisen, um mit dem Nietkopf verbunden zu werden.

Weitere Ausführungsformen der Erfindung ergeben sich aus den Unteransprüchen.

Nachfolgend wird die Erfindung anhand von Ausführungsbeispielen beschrieben die gemäß der Abbildungen näher erläutert werden.

Hierbei zeigen:
- Fig. 1: ein in eine Bauteilausnehmung eines Bauteils eingesetztes Nietteil gemäß dem Stande der Technik;
- Fig. 2a: eine erste Ausführungsform des erfindungsgemäßen Nietteils in unverpresster Form in einer seitlichen Schnittansicht;
- Fig. 2b: das in Fig. 2a gezeigte Nietteil nach dem Verpressen mit einem Bauteil in einer seitlichen Schnittansicht;
- Fig. 3: eine weitere Ausführungsform des erfindungsgemäßen Nietteils in unverpresster Form in einer seitlichen Schnittansicht;
- Fig. 4: eine weitere Ausführungsform des erfindungsgemäßen Nietteils in unverpresster Form in einer seitlichen Schnittansicht;
- Fig. 5: eine weitere Ausführungsform des erfindungsgemäßen Nietteils in unverpresster Form in einer seitlichen Schnittansicht;
- Fig. 6: eine weitere Ausführungsform des erfindungsgemäßen Nietteils in unverpresster Form in einer seitlichen Schnittansicht;
- Fig. 7a: eine weitere Ausführungsform des erfindungsgemäßen Nietteils in unverpresster Form mit stiftartiger Befestigungsvorrichtung in einer seitlichen Schnittansicht;
- Fig. 7b: eine weitere Ausführungsform des erfindungsgemäßen Nietteils in unverpresster Form mit stiftartiger Befestigungsvorrichtung in einer seitlichen Schnittansicht;
- Fig. 8a: eine seitliche Schnittansicht durch eine Ausführungsform des erfindungsgemäßen Nietteils in unverpresster Form sowie eine Ausführungsform des erfindungsgemäßen Nietwerkzeuges zur Darstellung des Verpressens in einer seitlichen Schnittansicht;
- Fig. 8b: eine Darstellung gemäß der Ausführungsform des Nietteils sowie des Nietwerkzeugs gemäß Fig. 8a nach dem Verpressen des Nietteils in einer seitlichen Schnittansicht;
- Fig. 9: eine weitere Ausführungsform des erfindungsgemäßen Nietteils in unverpresster Form in einer seitlichen Schnittansicht; und
- Fig. 10: eine weitere Ausführungsform des erfindungsgemäßen Nietteils in unverpresster Form in einer seitlichen Schnittansicht.

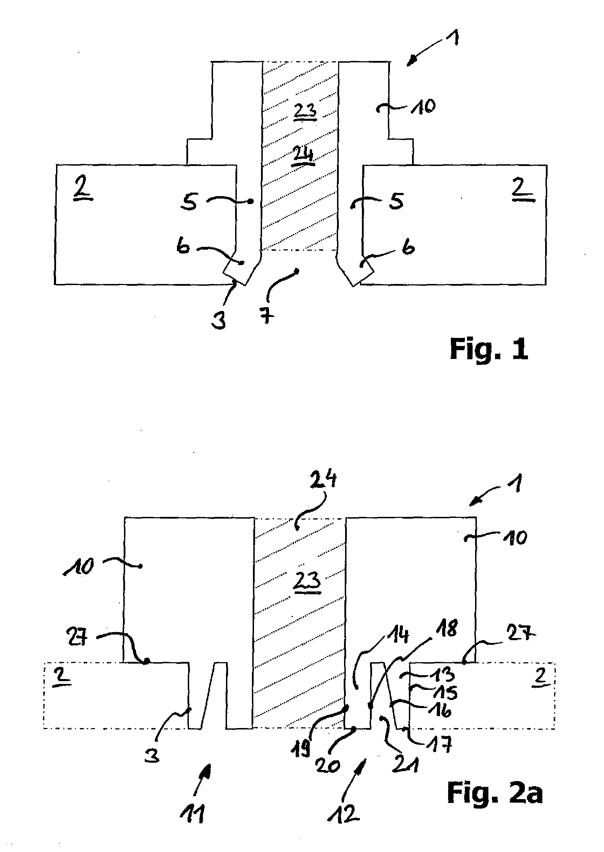

Fig. 1 zeigt ein aus dem Stande der Technik bekanntes Nietteil 1, welches in einer Bauteilausnehmung 3 eines Bauteils 2 durch Aufweitung des Abschlussrandes 6 seines Schaftes 5 verpresst ist. Das Nietteil 1 weist einen Nietkopf 10 auf, sowie den daran anschließenden Schaft 5, wobei das Nietteil 1 ein zentral und in einer Ausnehmung 24 angeordnetes Schraubeninnengewinde 23 aufweist, welches zur Befestigung weiterer Gegenstände vorgesehen ist. Das Schraubeninnengewinde 23 erstreckt sich hierbei über einen vorbestimmten Bereich der Ausnehmung 24 ohne jedoch sich bis zum Abschlussrand 6 des Schaftes 5 vollständig zu erstrecken. Aus technisch naheliegenden Gründen ist vor allem der Teilbereich der Ausnehmung 24 ausgespart, welcher dem Bereich des Abschlussrandes 6 zugeordnet ist, der für die Aufweitung und damit für das Verpressen des Nietteils 1 vorgesehen ist. Aufgrund der Aufweitung des Abschlussrandes 6 ergibt sich ein Raumbereich 7, welcher durch einen gedachten bündigen Abschluss der Bauteilausnehmung 3 des Bauteils 2 auf seiner dem Nietkopf 10 gegenüber liegenden Seite, durch den aufgeweiteten Abschlussrand 6 sowie dem Übergangsbereich zum Schraubeninnengewindes 23 in der Ausnehmung 24 des Nietteils 1 definiert ist. Aufgrund dieses Raumbereiches 7, welcher für die Befestigung bzw. zur Verbindung mit weiteren Gegenständen nicht geeignet ist, wird deutlich, dass die Verbindbarkeit des Nietteils 1 im verpressten Zustand mit weiteren zur Verbindung bzw. Befestigung vorgesehenen Gegenständen (welche vorliegend nicht gezeigt sind) beeinträchtigt ist.

Gemäß der ersten in Fig. 2a dargestellten Ausführungsform des erfindungsgemäßen Nietteils kommt es vorliegend jedoch nicht zu einer Ausbildung eines solchen Raumbereiches 7, welcher nicht zur Befestigung bzw. Verbindung mit weiteren Gegenständen geeignet wäre. Wie in Fig. 2a dargestellt, umfasst das ausführungsgemäße Nietteil 1 einen Nietkopf 10 sowie einen daran anschließenden Schaft 11, welcher einen Schlitz 21, insbesondere einen ringförmig in dem Schaft 11 umlaufenden Schlitz 21 aufweist und folglich einen geschlitzten Schaftabschnitt 12 definiert. Der geschlitzte Schaftabschnitt 12 weist seinerseits einen äußeren Schaftabschnitt 13 sowie einen inneren Schaftabschnitt 14 auf, die durch den Schlitz 21 voneinander beabstandet sind. Der äußere Schaftabschnitt 13 umfasst eine Außenwand 15 sowie eine Innenwand 16 und ist auf dem dem Nietkopf 10 abgewandten Ende des Nietteils 1 durch einen Abschlussrand 17 begrenzt. Gleichermaßen umfasst der inneren Schaftabschnitt 14 eine Außenwand 18 sowie eine Innenwand 19 und ist an seinem dem Nietkopf abgewandten Ende von einem zweiten Abschlussrand 20 begrenzt.

Zur deutlicheren Darstellung zeigt Fig. 2a weiterhin auch ein Bauteil 2 mit einer Bauteilausnehmung 3, in welches das ausführungsgemäße Nietteil 1 eingeführt ist. Hierbei ist jedoch darauf hinzuweisen, dass der in Fig. 2a dargestellte Zustand das Nietteils in einem noch unverpressten Zustand vorliegt. Das Nietteil 1 ist lediglich in die Bauteilausnehmung 3 des Bauteils 2 eingeführt, sodass ein dem Schaft 11 zugewandter Begrenzungsabschnitt 27 des Nietkopfes 10 auf der dem Nietkopf 10 zugewandten Seite des Bauteils 2 aufliegt.

Zur Verbindung des ausführungsgemäßen Nietteils 1 mit weiteren Gegenständen bzw. zur Befestigung an weiteren Gegenständen weist das ausführungsgemäße Nietteil 1 eine Ausnehmung 24 auf, welche sich etwa als Bohrung 24 von dem Nietkopf 10 zu dem Schaft 11 hin erstreckt. Die Ausnehmung 24 ist beidseitig offen ausgeführt, das heißt die Ausnehmung 24 ist sowohl von der dem Nietkopf 10 zugewandten Seite bzw. von der dem Schaft 11 zugewandten Seite her zugänglich. Weiterhin umfasst die Ausnehmung 24 ein Schraubeninnengewinde 23, welches sich ebenso über die gesamte Länge des Schaftes 11 sowie über die gesamte Länge des Nietkopfes 10 erstreckt. Die Länge des Schaftes 11 ist dabei so bemessen, dass sie weitgehend der Dicke des Bauteils 2 entspricht, so dass sich auf der dem Nietkopf 10 abgewandten Seite des Bauteils 2 ein bündiger Abschluss zwischen der Bauteilfläche sowie dem zweiten Abschlussrand 20 des inneren Schaftabschnittes 14 ergibt. Demgemäß liegt auch ein bündiger Abschluss der Erstreckung des Schraubeninnengewindes 23 des Nietteils 1 sowie der zuvor bezeichneten Fläche des Bauteils 2 vor.

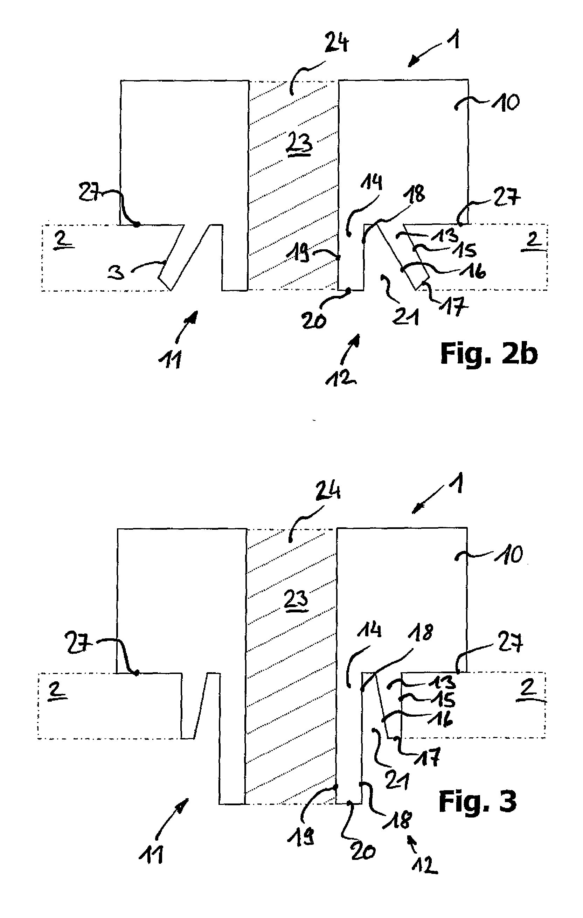

Fig. 2b zeigt die in Fig. 2a dargestellte Ausführungsform des erfindungsgemäßen Nietteils 1 nach dem Verpressen des Nietteils 1 in dem Bauteil 2. Zum Verpressen des Nietteils 1 wurde der äußere Schaftabschnitt 13 gegen die Begrenzungsfläche der Bauteilausnehmung 3 aufgeweitet, so dass der Schlitz 21 zwischen dem äußeren Schaftabschnitt 13 und dem inneren Schaftabschnitt 14 im Vergleich zum nicht verpressten Nietteil 1 gemäß Fig. 2a vergrößert ist.

Die dargestellte Aufweitungsform des äußeren Schaftabschnittes 13 ist hierbei nur exemplarisch zu verstehen und kann, wie dem Fachmann bekannt ist, durch beliebige Aufweitungen bzw. Aufweitungsformen ersetzt werden. Insbesondere kann zum Verpressen des Nietteils 1 in dem Bauteil 2 lediglich ein Teilbereich des äußeren Schaftabschnittes 13, ähnlich wie in Fig. 1 dargestellt, aufgeweitet werden.

Wie in Fig. 2b deutlich zu erkennen ist, ist auch nach dem Verpressen des Nietteils 1 in dem Bauteil 2 der innere Schaftabschnitt 14 unverändert, und steht damit weiterhin über seine ganze Ausdehnung und Länge zur Befestigung bzw. Verbindung mit weiteren Gegenständen zur Verfügung. Insbesondere ist darauf hinzuweisen, dass der zweite Abschlussrand 20 des inneren Schaftabschnittes 14 weiterhin bündig mit der dem Nietkopf 10 abgewandten Fläche des Bauteils 2 in bündigem Abschluss steht.

Fig. 3 zeigt eine weitere Ausführungsform des erfindungsgemäßen Nietteils 1, wobei sich die dargestellte Ausführungsform von der in den Fig. 2a und 2b gezeigten Ausführungsform lediglich darin unterscheidet, dass der innere Schaftabschnitt 14 im Vergleich zum äußeren Schaftabschnitt 13 länger ausgebildet ist. Folglich steht der äußere Schaftabschnitt 13 über den inneren Schaftabschnitt auf der dem Nietkopf abgewandten Seite des Nietteils über. Eine derartige Ausführungsform des erfindungsgemäßen Nietteils verbessert je nach technischen Anforderungen die Verbindbarkeit des Nietteils 1, da das zur Verbindung mit weiteren Gegenständen vorgesehene Schraubeninnengewinde 23 der Ausnehmung 24 nicht mit der dem Nietkopf 10 abgewandten Fläche des Bauteils 2 bündig abschließt, sondern sich über einen solchen Abschluss hinaus erstreckt.

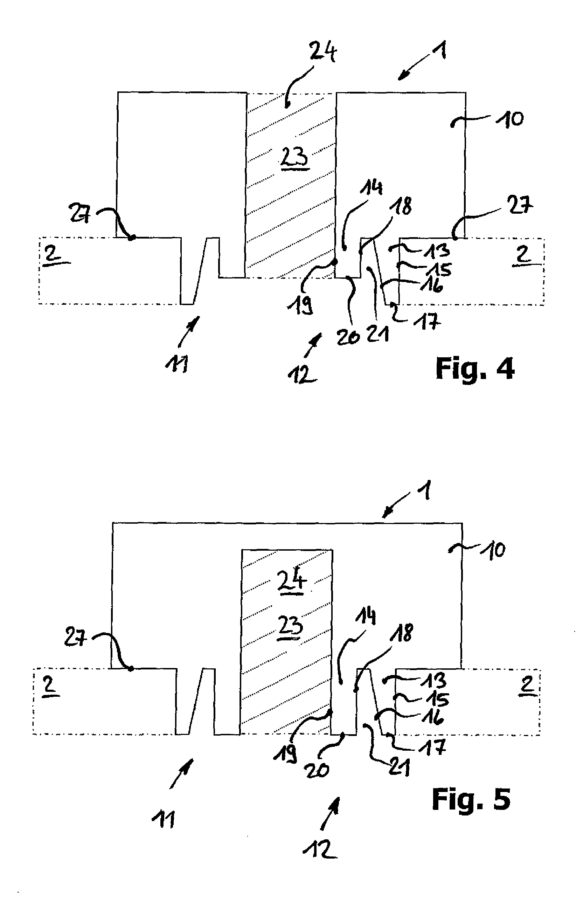

Fig. 4 zeigt eine weitere Ausführungsform des erfindungsgemäßen Nietteils, wobei sich Fig. 4 von den in den Figuren 2a, 2b und 3 gezeigten Ausführungsformen darin unterscheidet, dass der inneren Schaftabschnitt 14 kürzer als der äußere Schaftabschnitt 13 ausgebildet ist. Damit steht der äußere Schaftabschnitt 13 über dem inneren Schaftabschnitt 14 auf der dem Nietkopf abgewandten Seite des Nietteils über. Eine solche Ausführungsform kann sich vor allem dann als geeignet herausstellen, wenn der Gegenstand, welcher zur Verbindung bzw. zur Befestigung mit dem Nietteil 1 über das Schraubeninnengewinde 23 der Ausnehmung 24 vorgesehen ist, sich aufgrund technischer Gegebenheiten über den gedachten Abschluss der zum Nietkopf 10 abgewandten Fläche des Bauteils 2 erstreckt.

Fig. 5 zeigt eine weitere Ausführungsform des erfindungsgemäßen Nietteils 1, welche weitgehend der in Fig. 2a dargestellten Ausführungsform des erfindungsgemäßen Nietteils 1 entspricht. Im Gegensatz zu der in Fig. 2a dargestellten Ausführungsform ist die Ausnehmung 24 der in Fig. 5 dargestellten Ausführungsform jedoch lediglich von der Seite des Schaftes 11 her zugänglich. Demgemäß steht auch für die Befestigung eines weiteren Gegenstandes an dem Nietteil 1 bzw. zur Verbindung eines weiteren Gegenstandes mit dem Nietteil 1 über das in der Ausnehmung 24 angeordnete Schraubeninnengewinde 23 lediglich ein Zugang über die dem Nietkopf 10 abgewandte Seite des Nietteils 1 zur Verfügung.

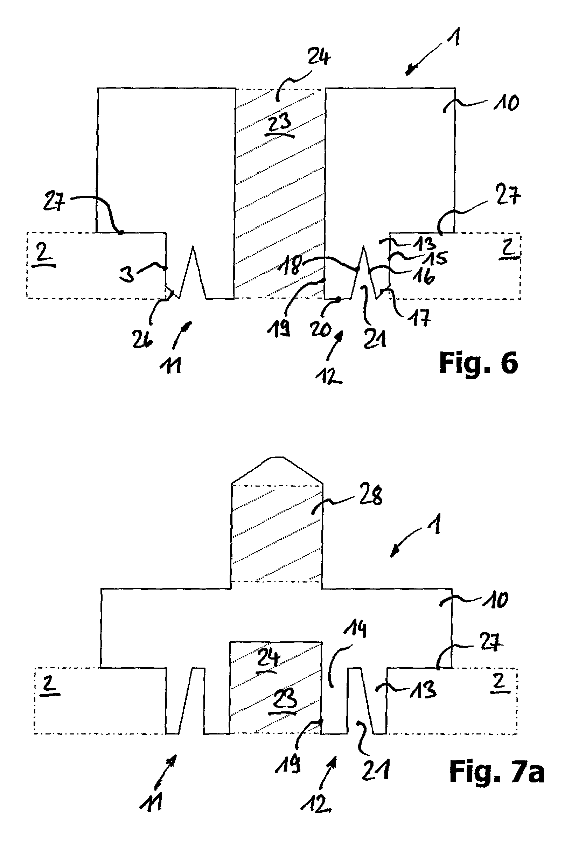

Fig. 6 zeigt eine weitere Ausführungsform des erfindungsgemäßen Nietteils 1, welches sich von den zuvor dargestellten Ausführungsformen des erfindungsgemäßen Nietteils 1 einerseits in der Form des Schlitzes 21 unterscheidet, andererseits auch in der Anordnung einer Abschrägung 26 am ersten Abschlussrand 17 des äußeren Schaftabschnittes 13. Die Abschrägung 26 erleichtert hierbei ein Einsetzen des Nietteils 1 in die Bauteilausnehmung 3 des Bauteils 2. Der ausführungsgemäß vorgesehene Schlitz 21 ist im Querschnitt (gemäß der Darstellung) dreiecksförmig und unterscheidet sich folglich von dem im Querschnitt trapezförmigen Schlitz 21 der vorhergehenden Ausführungsformen des erfindungsgemäßen Nietteils 1 deutlich. Eine derartige dreiecksförmige Schlitzform erlaubt einerseits ein erleichtertes Herstellungsverfahren des ausführungsgemäßen Nietteils 1, andererseits ist auch der innere Schaftabschnitt 14 im Vergleich zu den in den Figen. 2a bis 5 gezeigten Ausführungsformen deutlich dicker, weshalb das ausführungsgemäße Nietteil 1 auch für größere mechanischen Beanspruchungen geeignet ist.

Fig. 7a zeigt eine weitere Ausführungsform des erfindungsgemäßen Nietteils 1, wobei die Verbindbarkeit des Nietteils 1 einerseits durch ein in einer Ausnehmung 24 angeordnetes Schraubeninnengewinde 23 als auch durch ein an einer Befestigungsvorrichtung 28 vorgesehenes Schraubenaußengewinde gewährleistet ist. Die Befestigungsvorrichtung 28 ist hierbei als Schraubenfortsatz 28 ausgeführt, welcher an dem Nietkopf 10 auf der dem Schaft 11 abgewandten Seite des Nietkopfes 10 anschließt. In einer alternativ hierzu vorgesehenen Ausführungsform des erfindungsgemäßen Nietteils 1 kann das Nietteil 1 auch lediglich die Befestigungsvorrichtung 28 aufweisen, ohne jedoch ein Schraubeninnengewinde 23 in einer Ausnehmung 24 bereitstellen zu müssen. Insbesondere kann die Ausnehmung 24 deutlich verkleinert ausgeführt sein bzw. nicht vorhanden sein.

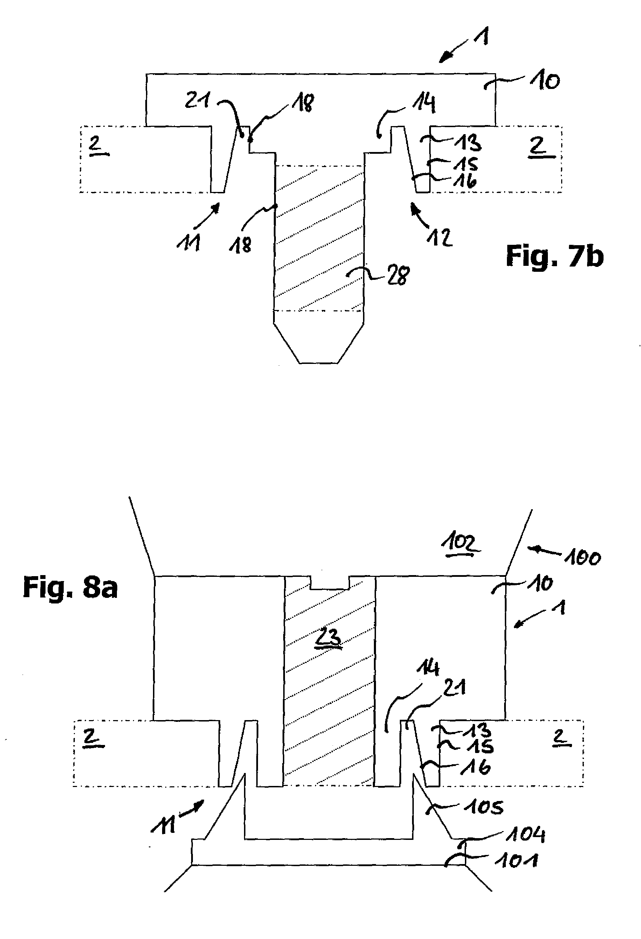

Fig. 7b zeigt eine weitere Ausführungsform des erfindungsgemäßen Nietteils 1, welche ebenso wie das in Fig. 7a gezeigte Nietteil 1 eine Befestigungsvorrichtung 28 in Form eines Schraubenfortsatzes 28 aufweist. Anders als die in Fig. 7a gezeigte Ausführungsform ist jedoch in der in Fig. 7b gezeigten Ausführungsform die Befestigungsvorrichtung 28 auf der dem Schaft 11 zugewandten Seite des Nietkopfes 10 angebracht. Insbesondere bildet die Befestigungsvorrichtung 28 einen Teilabschnitt des Schaftes 11. Ausführungsgemäß kann das Nietteil 1 nach dem Verpressen in einem Bauteil 2 mit relativ hohen Zügen belastet werden, falls diese wie in Fig. 7b dargestellt nach unten, also vom Nietkopf 10 weg gerichtet sind. Im Gegensatz hierzu sind in der in Fig. 7a dargestellten Ausführungsform des erfindungsgemäßen Nietteils 1 insbesondere Druckbelastungen besonders geeignet von dem Nietteil 1 abgestützt zu werden, welche auf den Nietkopf 10 zu weisen. In beiden Fällen wird die Kraftbelastung über den Begrenzungsabschnitte 27 auf flächige Abschnitte des Bauteils 2 übertragen, wodurch eine hohe Druck- oder Zugbelastung vom Bauteil 2 abgestützt werden kann.

Fig. 8a verdeutlicht den Vorgang des Verpressens einer Ausführungsform des erfindungsgemäßen Nietteils 1 mit einem Bauteil 2 mithilfe einer Ausführungsform eines erfindungsgemäßen Nietwerkzeuges 100. Das dargestellte Nietteil 1 entspricht hierbei dem in Fig. 2a dargestellten Nietteil 1. Das Nietwerkzeug 100 umfasst ein dem Schaft 11 zugeordnetes Werkzeugteil 101 sowie ein dem Nietkopf 10 zugeordnetes Gegenwerkzeugteil 102. Das Werkzeugteil 101 weist ein Formteil 104 auf, welches dazu ausgebildet ist, in den Schlitz 21 des Nietteils 1 derart einzugreifen, dass beim Verschieben des Werkzeugteils 101 gegen den Nietkopf 10 ein Aufweiten des äußeren Schaftabschnittes 13 und damit ein Verpressen des Nietteils 1 mit dem Bauteil 2 resultiert. Hierzu weist das Formteil 104 einen Verjüngungsabschnitt 105 auf, welcher so an die Form des Schaftes 11 des Nietteils 1 angepasst ist, dass beim Verschieben des Werkzeugteils 101 auf den Nietkopf 10 zu, der Verjüngungsabschnitt 105 in den Schlitz 21 eingreift und den äußeren Schaftabschnitt 13 mit ausreichender Kraft beaufschlagt, um ein Aufweiten des äußeren Schaftabschnittes 13 sowie ein Verpressen des Nietteils 1 herbeizuführen.

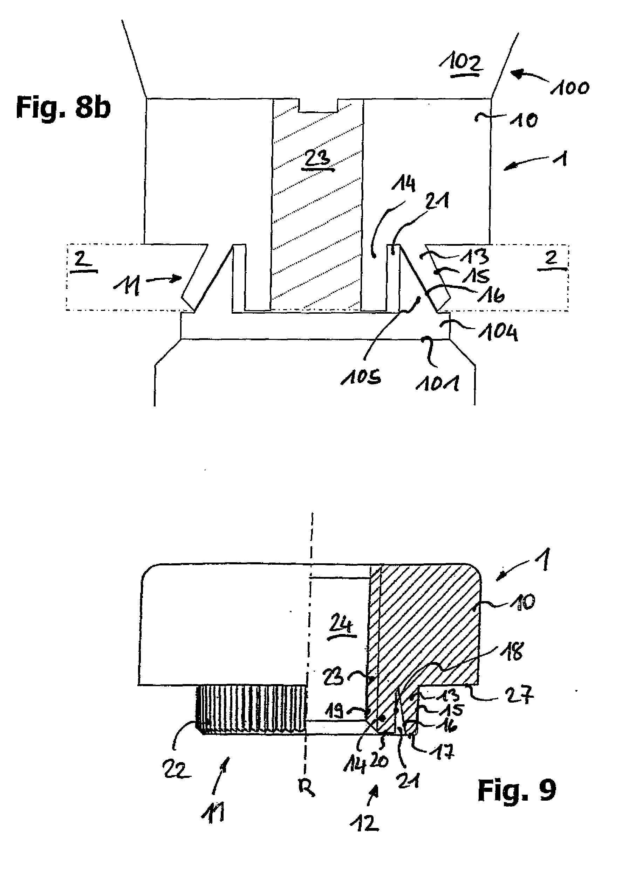

Der Vorgang des Verpressens wird schematisch in Fig. 8b verdeutlicht, in welcher das Werkzeugteil 101 gegen den Nietkopf 10 bereits so weit verschoben wurde, dass das Nietteil 1 in dem Bauteil 2 verpresst wurde. Zum Verpressen des Nietteils 1 braucht hierbei lediglich das Werkzeugteil 101 gegen das Gegenwerkzeugteil 102 verschoben werden, wobei das Werkzeugteil 102 unbewegt das Nietteil 1 fixiert. Alternativ ist eine Ausführungsform des Nietwerkzeuges 100 denkbar, bei welcher das Gegenwerkzeugteil 102 gegen das Werkzeugteil 101 verschoben wird, wobei der Verjüngungsabschnitt 105 des Formteils 104 in den Schlitz 21 des Schaftes 11 eingreift, um den äußeren Schaftabschnitt 13 aufzuweiten und das Nietteil 1 in dem Bauteil 2 zu verpressen.

An dieser Stelle soll auch darauf hingewiesen werden, dass der Schlitz 21 lediglich vorzugsweise kreisförmig in dem Schaft 11 umlaufend vorgesehen ist, aber auch andere, weitgehend beliebige Schlitzformen ausgebildet sein können. Insbesondere sind bereichsweise unterbrochene Schlitze 21 und auch bereichsweise unterbrochene Schäfte 11 denkbar.

Fig. 9 zeigt eine weitere Ausführungsform des erfindungsgemäßen Nietteils 1. Das ausführungsgemäße Nietteil 1 umfasst als besonderes Merkmal eine auf der Außenwand 15 des äußeren Schaftabschnittes 13 angeordnete Verdrehsicherung 22, welche vorliegend als Rändel 22 ausgeführt ist. Die Verdrehsicherung 22 weist hierbei eine Anzahl an Materialerhebungen und Materialvertiefungen auf, welche parallel zueinander angeordnet in Längsrichtung des Schaftes 11 verlaufen. Beim Verpressen des Nietteils 1 in einem Bauteil 2 (vorliegend nicht dargestellt) schneiden sich die Materialerhebungen in den Randbereich der Bauteilausnehmung 3 des Bauteils 2 ein und verhindern somit ein Verdrehen des Nietteils 1 bei Beaufschlagung des Nietteils 1 mit einem Drehmoment entlang seiner Rotationssymmetrieachse R.

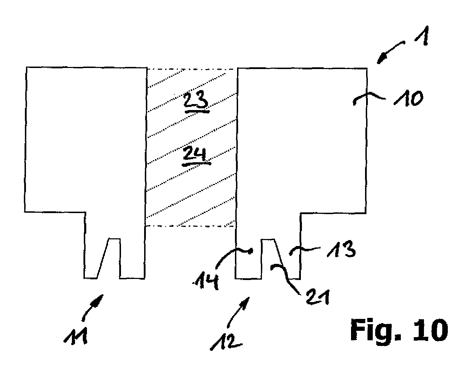

Fig. 10 zeigt eine weitere Ausführungsform des erfindungsgemäßen Nietteils 1. Die dargestellte Ausführungsform kennzeichnet sich dadurch, dass sich das in der Ausnehmung 24 angeordnete Schraubeninnengewinde 23 lediglich über einen Teilbereich der Innenwand des Schaftes 11 erstreckt. Weiterhin erstreckt sich der Schlitz 21, welcher den schlitzförmigen Schaftabschnitt 12 des Schaftes 11 definiert, in Richtung auf den Nietkopf 10 lediglich über einen Teil der Gesamtlänge des Schaftes 11. Folglich ist die Gesamtlänge des Schaftes 11 im Vergleich zu den Längenausdehnungen des äußeren Schaftabschnittes 13 sowie des inneren Schaftabschnittes 14 deutlich größer. Insbesondere steht beim Verpressen des Nietteils 1 in einem Bauteil 2 (vorliegend nicht gezeigt) lediglich der äußere Schaftabschnitt 13 über seine im Vergleich zum Schaft 11 geringere Längenausdehnung zur Verfügung.

An dieser Stelle sei darauf hingewiesen, dass alle oben beschriebenen Teil für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Nietteil
- 2: Bauteil
- 3: Bauteilausnehmung

- 5: Schaft
- 6: Abschlussrand
- 7: Raumbereich

- 10: Nietkopf
- 11: Schaft
- 12: geschlitzter Schaftabschnitt
- 13: äußerer Schaftabschnitt
- 14: innerer Schaftabschnitt
- 15: Außenwand
- 16: Innenwand
- 17: Abschlussrand
- 18: Außenwand
- 19: Innenwand
- 20: Abschlussrand
- 21: Schlitz

- 22: Verdrehsicherung/Rändel
- 23: Schraubeninnengewinde
- 24: Ausnehmung /Bohrung
- 26: Abschrägung
- 27: Begrenzungsabschnitt
- 28: Befestigungsvorrichtung/Schraubenfortsatz

- 100: Nietwerkzeug
- 101: Werkzeugteil
- 102: Gegenwerkzeugteil
- 104: Formteil
- 105: Verjüngungsabschnitt

- R: Rotationssvmmetrieachse

## Patentansprüche

1. Nietteil (1) mit einem Nietkopf (10), der als kopfartige Erweiterung eines an den Nietkopf (10) anschließenden Schaftes (11) ausgebildet ist, wobei der Schaft (11) an seinem dem Nietkopf (10) abgewandten Ende einen, insbesondere kreisförmig umlaufenden Schlitz (21) aufweist, und so einen geschlitzten Schaftabschnitt (12) definiert, wobei der geschlitzte Schaftabschnitt (12) einen äußeren Schaftabschnitt (13) und einen inneren Schaftabschnitt (14) aufweist, und der äußere Schaftabschnitt (13) eine Außenwand (15) und eine Innenwand (16) umfasst und an seinem dem Nietkopf (10) abgewandten Ende von einem Abschlussrand (17) begrenzt wird, und der innere Schaftabschnitt (14) wenigstens eine Außenwand (18) umfasst, wobei der äußere Schaftabschnitt (13) wenigstens teilweise zum materialumformenden Verpressen vorgesehen ist, um das Nietteil (1) in einer Bauteilausnehmung (3) eines Bauteils (3) zu befestigen.

2. Nietteil (1), insbesondere Nietmutter (1), mit einem Nietkopf (10), der als kopfartige Erweiterung eines an den Nietkopf (10) anschließenden Schaftes (11) ausgebildet ist, wobei der Schaft (11) an seinem dem Nietkopf (10) abgewandten Ende einen, insbesondere kreisförmig umlaufenden Schlitz (21) aufweist, und so einen geschlitzten Schaftabschnitt (12) definiert, wobei der geschlitzte Schaftabschnitt (12) einen äußeren Schaftabschnitt (13) und einen inneren Schaftabschnitt (14) aufweist, und der äußere Schaftabschnitt (13) eine Außenwand (15) und eine Innenwand (16) umfasst und an seinem dem Nietkopf (10) abgewandten Ende von einem Abschlussrand (17) begrenzt wird, und der innere Schaftabschnitt (14) eine Außenwand (18) und eine Innenwand (19) umfasst und an seinem dem Nietkopf (10) abgewandten Ende von einem zweiten Abschlussrand (20) begrenzt wird, und wobei der äußere Schaftabschnitt (13) wenigstens teilweise zum materialumformenden Verpressen vorgesehen ist, um das Nietteil (1) in einer Bauteilausnehmung (3) eines Bauteils (3) zu befestigen.

3. Nietteil nach einem der vorhergehenden Ansprüche,
**dadurch gekennzeichnet, dass**
der Schlitz (21) sich zum Nietkopf (10) hin verjüngend und/oder
der äußere Schaftabschnitt (13) sich zum Nietkopf (10) hin verbreiternd ausgeführt ist.

4. Nietteil nach einem der vorhergehenden Ansprüche,
**dadurch gekennzeichnet, dass**
die Außenwand (15) des Schaftes (11), insbesondere des äußeren Schaftabschnittes (13) eine Verdrehsicherung (22), insbesondere eine Rändel (22) aufweist.

5. Nietteil nach einem der Ansprüche 2 bis 4,
**dadurch gekennzeichnet, dass**
das Nietteil (1) ein Schraubeninnengewinde (23) aufweist, welches sich über Bereiche einer runden Ausnehmung (24), insbesondere einer Bohrung (24), des Nietkopfes (10) und/oder über Bereiche der Innenwand (19) des inneren Schaftabschnittes (14) erstreckt.

6. Nietteil nach einem der vorhergehenden Ansprüche,
**dadurch gekennzeichnet, dass**
der äußere Schaftabschnitt (13) und der innere Schaftabschnitt (14) auf der dem Nietkopf (10) abgewandten Seite des Nietteils (1) sich über eine im Wesentlichen gleiche Längenausdehnung erstrecken oder der äußere Schaftabschnitt (13) über den inneren Schaftabschnitt (14) auf der dem Nietkopf (10) abgewandten Seite des Nietteils (1) übersteht oder der innere Schaftabschnitt (14) über den äußeren Schaftabschnitt (13) auf der dem Nietkopf (10) abgewandten Seite des Nietteils (1) übersteht.

7. Nietteil nach einem der vorhergehenden Ansprüche,
**dadurch gekennzeichnet, dass**
der geschlitzte Schaftabschnitt (12) sich höchstens über die Dicke des Bauteils (3) von dem dem Nietkopf (10) abgewandten Ende des Schaftes (11) zum Nietkopf (10) hin erstreckt, insbesondere sich nicht bis zum Nietkopf (10) hin erstreckt.

8. Nietteil nach einem der vorhergehenden Ansprüche,
**dadurch gekennzeichnet, dass**
der innere Schaftabschnitt (14) auf seiner Außenwand (18) einen Gewindeabschnitt aufweist.

9. Nietteil nach einem der vorhergehenden Ansprüche,
**dadurch gekennzeichnet, dass**
der endständige Abschlussrand (17) des äußeren Schaftabschnittes (13) eine Abschrägung (26) oder Abrundung aufweist, welche das Einfügen des Nietteils (1) in die Bauteilausnehmung (3) des Bauteils (2) erleichtert.

10. Nietteil nach einem der vorhergehenden Ansprüche,
**dadurch gekennzeichnet, dass**
das Nietteil (1) und/oder der äußere Schaftabschnitt (13) und/oder der innere Schaftabschnitt (14) wenigstens teilweise oberflächenbehandelt ist.

11. Nietteil nach einem der vorhergehenden Ansprüche,
**dadurch gekennzeichnet, dass**
der Nietkopf (10) des Nietteils (1) an dem Übergangsbereich (30) zwischen dem Nietkopf (10) und dem äußeren Schaftabschnitt (13) einen nach dem Verpressen des Nietteils (1) in der Bauteilausnehmung (3) des Bauteils (2) einen auf dem Bauteil (2) bündig anliegenden Begrenzungsabschnitt (27) aufweist, welcher eine Verdrehsicherung (22), insbesondere eine Rändel (22), aufweist.

12. Nietteil nach einem der vorhergehenden Ansprüche,
**dadurch gekennzeichnet, dass**
die effektive Wanddicke des äußeren Schaftabschnittes (13) weniger als 1 mm, insbesondere zwischen 0,2 mm und 0,8 mm ist und/oder die effektive Wanddicke des inneren Schaftabschnittes (14) weniger als 2 mm, insbesondere zwischen 0,5 mm und 1,5 mm ist.

13. Nietteil nach einem der vorhergehenden Ansprüche,
**dadurch gekennzeichnet, dass**
der Nietkopf (10) eine stiftförmige Befestigungsvorrichtung (28), insbesondere einen Schraubenfortsatz (28) aufweist, welche fest mit dem Nietkopf (10) verbunden ist.

14. Nietwerkzeug zum Verpressen eines Nietteils (1) mit einem Nietkopf (10), der als kopfartige Erweiterung eines an den Nietkopf (10) anschließenden Schaftes (11) ausgebildet ist, wobei der Schaft (11) an seinem dem Nietkopf (10) abgewandten Ende einen, insbesondere kreisförmig umlaufenden Schlitz (21) aufweist, und so einen geschlitzten Schaftabschnitt (12) definiert, wobei der geschlitzte Schaftabschnitt (12) einen äußeren Schaftabschnitt (13) und einen inneren Schaftabschnitt (14) aufweist, und der äußere Schaftabschnitt (13) eine Außenwand (15) und eine Innenwand (16) umfasst und an seinem dem Nietkopf (10) abgewandten Ende von einem ersten Abschlussrand (17) begrenzt wird, insbesondere zum Verpressen eines Nietteils (1) gemäß den vorhergehenden Ansprüchen, wobei
das Nietwerkzeug (100) zum Verpressen des Nietteils (1) ein dem Schaft (11) zugeordnetes Werkzeugteil (101) aufweist, wobei das Werkzeugteil (101) ein den äußeren Schaftabschnitt (13) mit Kraft beaufschlagendes Formteil (104) aufweist, welches einen zu seinem Ende hin zulaufenden Verjüngungsabschnitt (105) aufweist, der zum Aufweiten des äußeren Schaftabschnittes (13) des Nietteils (1) in den Schlitz (20) eingreift und zunehmend in Richtung des Nietkopfes (10) des Nietteils (1) unter Kraftbeaufschlagung und Materialumformung des äußeren Schaftabschnittes (13) verschoben wird, um das Nietteil (1) in einer Bauteilausnehmung (3) eines Bauteils (3) zu befestigen.

15. Verfahren zum Verpressen eines Nietteils (1) mit einem Nietkopf (10), der als kopfartige Erweiterung eines an den Nietkopf (10) anschließenden Schaftes (11) ausgebildet ist, wobei der Schaft (11) an seinem dem Nietkopf (10) abgewandten Ende einen, insbesondere kreisförmig umlaufenden Schlitz (21) aufweist, und so einen geschlitzten Schaftabschnitt (12) definiert, wobei der geschlitzte Schaftabschnitt (12) einen äußeren Schaftabschnitt (13) und einen inneren Schaftabschnitt (14) aufweist, und der äußere Schaftabschnitt (13) eine Außenwand (15) und eine Innenwand (16) umfasst und an seinem dem Nietkopf (10) abgewandten Ende von einem ersten Abschlussrand (17) begrenzt wird, insbesondere zum Verpressen eines Nietteils (1) nach einem der vorhergehenden Ansprüche 1 bis 13,
unter Verwendung eines Nietwerkzeuges (100), welches zum Verpressen des Nietteils (1) ein dem Schaft (11) zugeordnetes Werkzeugteil (101) aufweist, wobei das Werkzeugteil (101) ein den äußeren Schaftabschnitt (13) mit Kraft beaufschlagendes Formteil (104) aufweist, welches einen zu seinem Ende hin zulaufenden Verjüngungsabschnitt (105) aufweist, insbesondere unter Verwendung eines Nietwerkzeuges (100) nach Anspruch 18, wobei
der Verjüngungsabschnitt (105) des Werkzeugteils (101) zum Aufweiten des äußeren Schaftabschnittes (11) des Nietteils (1) in den Schlitz (20) eingeführt wird und zunehmend in Richtung des Nietkopfes (10) des Nietteils (1) unter Kraftbeaufschlagung und Materialumformung des äußeren Schaftabschnittes (11) verschoben wird, um das Nietteil (1) in einer Bauteilausnehmung (3) eines Bauteils (3) zu befestigen.
